# EUROPÄISCHE PATENTSCHRIFT

(11) **EP 2 985 500 B1**
(45) Veröffentlichungstag und Bekanntmachung des Hinweises auf die Patenterteilung: **19.10.2016**
(21) Anmeldenummer: 15180833.4
(22) Anmeldetag: 12.08.2015
(51) Int. Cl.: F16L 3/10, F16B 37/04

(54) **ROHRSCHELLE**
PIPE CLAMP
COLLIER

(30) Priorität: 12.08.2014 DE 102014111513
(43) Veröffentlichungstag der Anmeldung: 17.02.2016
(73) Patentinhaber: Sinn, Edgar Emil, 56587 Strassenhaus (DE)
(72) Erfinder: Sinn, Edgar Emil, 56587 Strassenhaus (DE)
(74) Vertreter: Wimmer, Stephan

(56) Entgegenhaltungen:
- EP-A2- 1 431 641
- DE-A1-102008 047 787
- DE-U1- 8 806 714

## Beschreibung

Die vorliegende Erfindung ist auf eine Rohrschelle zum Umfassen und Halten eines Rohrs oder eines Schlauchs bezogen.

Zur Befestigung von Rohren für Wasser, Gase oder andere Fluide werden in der Regel Rohrschellen verwendet. Eine Rohrschelle weist einen Schellenkörper auf, der dazu ausgebildet ist, ein Rohr im Wesentlichen kreisförmig zu umschließen und zu halten. Der Schellenkörper ist oft mit einem Gewinde starr verbunden, mittels dessen er unmittelbar oder mittelbar beispielsweise mit einer Wand oder einer Decke eines Bauwerks oder mit einem Profilträger verbunden werden kann. Der Schellenkörper weist beispielsweise eine mittels einer Spannschraube verschließbare Öffnung und ein gegenüberliegendes Gelenk auf. Ein Rohr kann durch die Öffnung in den Schellenkörper eingelegt werden. Durch Anziehen der Schraube wird der Schellenkörper an die Außenseite des Rohres gedrückt.

Rohrschellen sollen einerseits kostengünstig herstellbar und andererseits auch hohen mechanischen Belastungen standhalten und von Handwerkern - im Idealfall ohne Einarbeitungszeit - schnell und sicher montier- und handhabbar sein. Es existieren zahlreiche verschiedene Bauarten, die jeweils spezifische Vor- und Nachteile aufweisen.

In DE 10 2008 047 787 A1 ist eine Rohrschelle mit einem halbzylindrischen, drehbaren Gewindeelement beschrieben. Ein klammerartiges federelastisches Rückstellelement drückt gegen die ebene Fläche am Gewindeelement, um es auszurichten. Um ein seitliches Verrutschen auch ohne Schraube zu verhindern, sind am Rückstellelement Haltestege vorgesehen.

In DE 88 06 714.9 U1 ist eine Rohrschelle mit einer länglich quaderförmigen Mutter beschrieben. Eine U-förmige Klammer drückt mit einem Ende gegen die Innenseite eines Verbindungsflansches und mit dem anderen Ende gegen die quaderförmige Mutter.

Eine Aufgabe der vorliegenden Erfindung besteht darin, eine verbesserte Rohrschelle zu schaffen, insbesondere eine Rohrschelle, die einerseits möglichst kostengünstig herstellbar und andererseits möglichst einfach, schnell und sicher handhabbar und robust ist.

Diese Aufgabe wird durch die Gegenstände der unabhängigen Ansprüche gelöst.

Weiterbildungen sind in den abhängigen Ansprüchen angegeben.

Eine Rohrschelle umfasst einen Schellenkörper mit einem ersten Bügel und einem zweiten Bügel zum Umfassen und Halten eines Rohrs oder eines Schlauchs, eine Gelenkeinrichtung zum gelenkigen Verbinden eines ersten Endes des ersten Bügels mit einem ersten Ende des zweiten Bügels, ein Gewindebauteil mit einem Innengewinde, wobei das Gewindebauteil schwenkbar an einem zweiten Ende des ersten Bügels gelagert ist und eine Mehrzahl von Abflachungen aufweist, und ein elastisches Bauteil zum Ausüben einer Kraft auf das Gewindebauteil zum elastischen Halten des Gewindebauteils in einer vorbestimmen Winkelposition, wobei das elastische Bauteil eine Mehrzahl von Zungen, die an je einer der Mehrzahl von Abflachungen anliegen, aufweist.

Das Gewindebauteil weist insbesondere im Wesentlichen die Gestalt eines Kreiszylinders auf, d.h. seine äußere Oberfläche entspricht weitgehend der Mantelfläche eines Kreiszylinders. Abweichend von der ideal kreiszylindrischen Gestalt weist das Gewindebauteil insbesondere eine Durchgangsbohrung mit dem Innengewinde und die Abflachungen, an denen die Zungen des elastischen Bauteils anliegen, auf. Das Gewindebauteil ist insbesondere um eine Achse parallel zur Längsachse eines von der Rohrschelle gehaltenen Rohrs und orthogonal zur Achse des Innengewindes schwenkbar.

Das zweite Ende des zweiten Bügels weist insbesondere einen Einschnitt zum Aufnehmen eines Schafts einer Spannschraube, deren Außengewinde in das korrespondierende Innengewinde am Gewindebauteil eingreift, auf. Ferner kann die Rohrschelle eine Befestigungsmutter oder eine andere Befestigungseinrichtung an einem der beiden Bügel aufweisen, mittels derer die Rohrschelle beispielsweise an einem Bauwerk befestigt werden kann.

Das elastische Bauteil ist insbesondere ein Federbauteil, das aus einem Federstahlblech durch Stanzen und Biegen gefertigt sein kann. Das elastische Bauteil und das Gewindebauteil sind insbesondere so ausgebildet, dass die Wirkungslinie der vom elastischen Bauteil auf das Gewindebauteil ausgeübten Kraft nicht die Schwenkachse des Gewindebauteils schneidet, sondern von dieser beabstandet ist und somit ein Drehmoment auf das Gewindebauteil ausübt, wenn dieses sich nicht in der vorbestimmten Winkelposition befindet. Das elastische Bauteil wirkt unmittelbar auf das Gewindebauteil ein, indem es unmittelbar an dem Gewindebauteil anliegt oder auf andere Weise unmittelbar mit ihm verbunden ist.

Die Rohrschelle kann, insbesondere in einigen hier beschriebenen Ausführungsformen und Varianten, besonders kompakt ausgebildet sein. Zwar ist der Durchmesser der Rohrschelle durch den Querschnitt des zu haltenden Rohrs oder Schlauchs vorgegeben. Aber bei einer Rohrschelle, wie sie hier beschrieben ist, kann das Maß, um das die zweiten Enden der Bügel - mit dem Gewindebauteil und der Spannschraube - vom Rohr abstehen, besonders klein ausfallen. Während beispielsweise bei einem bestimmten Rohrdurchmesser vergleichbare Rohrschellen in diesem Bereich je nach Bauart um 14 mm oder gar 18 mm von der Oberfläche des Rohrs abstehen, beträgt das entsprechende Maß bei einer Rohrschelle, wie sie hier beschrieben ist, für den gleichen Rohrdurchmesser nur ca. 10 mm. Dies stellt vor allem dann einen großen Vorteil dar, wenn das Rohr mit einer Isolierschicht versehen werden soll, mehrere Rohrschellen mit geringem gegenseitigen Abstand montiert werden sollen oder allgemein beengte räumliche Gegebenheiten vorliegen.

Das auf das schwenkbar gelagerte Gewindebauteil einwirkende elastische Bauteil kann bei geringer Haftreibung zwischen dem Gewindebauteil und dem ersten Bügel eine Auslenkung des Gewindebauteils aus seiner vorbestimmten Winkelposition durch eine geringe Kraft und trotzdem ein zuverlässiges Rückstellen des Gewindebauteils in die vorbestimmte Winkelposition ermöglichen.

Das Gewindebauteil weist insbesondere zwei Abflachungen auf, die symmetrisch zu dem Innengewinde angeordnet sind. Eine Abflachung ist insbesondere ein ebener Abschnitt der äußeren Oberfläche des Gewindebauteils. Im Fall einer im Wesentlichen kreiszylindrischen Gestalt des Gewindebauteils ist die Abflachung insbesondere durch eine in Richtung orthogonal zur Schwenkachse des Gewindebauteils gerade verlaufende Nut gebildet. Die Nut weist beispielsweise einen trapezförmigen Querschnitt auf.

Bei einer Rohrschelle, wie sie hier beschrieben ist, weist das elastische Bauteil insbesondere eine Zunge auf, die an der Abflachung des Gewindebauteils anliegt.

Eine Zunge ist insbesondere ein streifenförmiger, beispielsweise im Wesentlichen rechteckiger, Abschnitt, dessen Länge größer ist als seine Breite. Das elastische Bauteil kann zwei oder mehr Zungen aufweisen. Insbesondere ist für jede Abflachung des Gewindebauteils eine Zunge vorgesehen. Bei der vorbestimmten Winkelposition des Gewindebauteils liegt jede Zunge flächig an der korrespondierenden Abflachung des Gewindebauteils an.

Bei einer Rohrschelle, wie sie hier beschrieben ist, umgreift das elastische Bauteil insbesondere von der Außenseite der Rohrschelle her das Gewindebauteil und das zweite Ende des ersten Bügels.

Das elastische Bauteil umgreift das Gewindebauteil zumindest teilweise, d.h. es nimmt bezogen auf den Flächenschwerpunkt des Querschnitts des Gewindebauteils (in einer Fläche orthogonal zu dessen Schwenkachse) einen Winkel von 180 Grad oder mehr ein, beispielsweise einen Winkel von mindestens 240 Grad oder von mindestens 270 Grad. Zur Montage wird das elastische Bauteil insbesondere von der Außenseite der Rohrschelle her über das Gewindebauteil und das zweite Ende des ersten Bügels gestülpt. Dabei wird das elastische Bauteil insbesondere in eine Richtung bewegt, die parallel oder im Wesentlichen parallel zu einem Radius eines in die fertiggestellte Rohrschelle in vorgesehener Weise eingelegten Rohrs ist. Die Richtung der Bewegung geht dabei zu dem von einem von der Rohrschelle in vorgesehener Weise gehaltenen Rohr eingenommenen Raum hin.

Bei einer Rohrschelle, wie sie hier beschrieben ist, umgreift insbesondere ein erstes Ende des elastischen Bauteils das zweite Ende des ersten Bügels teilweise, wobei das zweite Ende des elastischen Bauteils an dem Gewindebauteil unmittelbar anliegt.

Insbesondere ist das zweite Ende des ersten Bügels zumindest teilweise zwischen dem Gewindebauteil und dem elastischen Bauteil angeordnet. Das zweite Ende des ersten Bügels und das erste Ende des elastischen Bauteils sind insbesondere jeweils im Wesentlichen kreisbogenförmig ausgebildet, d.h. dass ihre Querschnitte in Schnittebenen orthogonal zur Schwenkachse des Gewindebauteils kreisbogenförmig sind.

Bei einer Rohrschelle, wie sie hier beschrieben ist, weist der erste Bügel insbesondere einen ersten im Wesentlichen kreisbogenförmigen Abschnitt zum teilweisen Umfassen eines Rohrs oder eines Schlauchs und einen zweiten im Wesentlichen kreisbogenförmigen Abschnitt zum teilweisen Umfassen des Gewindebauteils auf, wobei der erste Abschnitt und der zweite Abschnitt in entgegengesetzte Richtungen gekrümmt sind.

Bezogen auf den von der Rohrschelle zu umschließenden Raum sind insbesondere der erste im Wesentlichen kreisbogenförmige Abschnitt nach innen und der zweite im Wesentlichen kreisbogenförmigen Abschnitt nach außen gekrümmt. Der erste im Wesentlichen kreisbogenförmige Abschnitt und der zweite im Wesentlichen kreisbogenförmigen Abschnitt grenzen insbesondere unmittelbar aneinander an oder weisen nur einen geringen Abstand auf.

Das kreisbogenförmige Biegen eines Abschnitts eines Spaltbands oder eines anderen Materialstreifens aus dem der erste Bügel gefertigt wird, kann mit geringerem Aufwand und mit geringerem Einfluss auf die Eigenschaften des Materials (beispielsweise Härtung, Versprödung) möglich sein als beispielsweise ein Abkanten.

Bei einer Rohrschelle, wie sie hier beschrieben ist, grenzen der erste im Wesentlichen kreisbogenförmige Abschnitt und der zweite im Wesentlichen kreisbogenförmige Abschnitt insbesondere unmittelbar an einander an.

Ein unmittelbares Aneinandergrenzen der beiden kreisbogenförmigen Abschnitte oder ein nur geringer Abstand zwischen den beiden kreisbogenförmigen Abschnitten kann eine besondere Kompaktheit der Rohrschelle ermögliche.

Bei einer Rohrschelle, wie sie hier beschrieben ist, umfasst der zweite kreisbogenförmige Abschnitt des ersten Bügels das Gewindebauteil insbesondere zu mindestens einem Drittel oder zu mindestens der Hälfte oder zu mindestens zwei Dritteln.

Der zweite kreisbogenförmige Abschnitt des ersten Bügels umfasst das Gewindebauteil insbesondere dann zu einem Drittel, zur Hälfte oder zu zwei Dritteln, wenn der zweite kreisbogenförmige Abschnitt des ersten Bügels bezogen auf den Flächenschwerpunkt des Querschnitts des Gewindebauteils einen Winkel von 120 Grad bzw. 180 Grad bzw. 240 Grad umfasst. Der zweite kreisbogenförmige Abschnitt des ersten Bügels kann vollflächig oder über einen größeren Winkelbereich oder nur linienförmig an dem Gewindebauteil anliegen

Bei einer Rohrschelle, wie sie hier beschrieben ist, ragt das zweite Ende des ersten Bügels bezogen auf die Richtung der Längsachse einer in das Gewindebauteil eingesetzten und vollständig angezogenen Spannschraube insbesondere im Wesentlichen mindestens bis zum Flächenschwerpunkt des Querschnitts des Gewindebauteils.

Dadurch wird auch bei hoher Reibung zwischen der Schraube und dem Gewindebauteil eine unerwünschte Rotation des Gewindebauteils um die Längsachse der Schraube wirksam formschlüssig unterbunden.

Bei einer Rohrschelle, wie sie hier beschrieben ist, beträgt die in Richtung parallel zur Längsachse eines in vorgesehener Weise in die Rohrschelle eingelegten geraden Rohrs gemessene Länge des Gewindebauteils mindestens neun Zehntel der in der gleichen Richtung gemessenen Breite des ersten Bügels.

Insbesondere sind die in Richtung parallel zur Längsachse eines in vorgesehener Weise in die Rohrschelle eingelegten geraden Rohrs gemessene Länge des Gewindebauteils und die in der gleichen Richtung gemessene Breite des ersten Bügels im Wesentlichen gleich, unterscheiden sich also höchstens um wenige Prozent (5 Prozent, 3 Prozent oder 1 Prozent).

Der Eingriff der Zungen des Federbauteils in die Abflachungen des Gewindebauteils unterbindet formschlüssig ein Verrutschen des Gewindebauteils in Richtung parallel zur Symmetrieachse des Gewindebauteils und zur Längsachse eines in vorgesehener Weise in die Rohrschelle eingelegten Rohrs. Anders als bei den in DE 10 2008 047 787 A1 und DE 88 06 714.9 beschriebenen Rohrschellen sind deshalb keine zusätzliche Einrichtungen erforderlich, die ein Verrutschen des Gewindebauteils verhindern. Das Gewindebauteil kann deshalb länger sein und damit eine gleichmäßigere und zuverlässigere Krafteinleitung in den ersten Bügel der Rohrschelle ermöglichen.

Eine Rohrschelle, wie sie hier beschrieben ist, umfasst insbesondere ferner eine Öffnung im zweiten Bügel der Rohrschelle zur teilweisen Aufnahme des Rands eines Kopfes einer in das Gewindebauteil eingesetzten Spannschraube im in vorgesehener Weise geschlossenen und gespannten Zustand der Rohrschelle.

Das teilweise Eingreifen des Kopfes der Schraube in die Öffnung im zweiten Bügel kann eine geringere Ausladung bzw. einen geringeren maximalen Abstand des Kopfes der Schraube und damit auch des zweiten Endes des zweiten Bügels von der Achse eines in vorgesehener Weise in die Rohrschelle eingelegten Rohrs ermöglichen.

Bei einer Rohrschelle, wie sie hier beschrieben ist, ist das zweite Ende des zweiten Bügels insbesondere durch Zungen gebildet, wobei die Öffnung zur teilweisen Aufnahme des Rands eines Kopfes einer Spannschraube durch einen Einschnitt zwischen den Zungen gebildet ist. Dazu reicht der Einschnitt insbesondere in den im Wesentlichen kreisbogenförmigen und zum teilweisen Umfassen eines Rohrs vorgesehenen und ausgebildeten Abschnitt des zweiten Bügels hinein.

Alternativ kann die Öffnung von diesem Einschnitt beabstandet und beispielsweise durch einen Steg getrennt sein.

Bei einer Rohrschelle, wie sie hier beschrieben ist, weist das elastische Bauteil insbesondere eine Stufe auf, die an einem Rand des zweiten Endes des ersten Bügels anliegt.

Durch die an dem Rand des zweiten Endes des ersten Bügels anliegende Stufe kann ein Verschieben des elastischen Bauteils formschlüssig verhindert werden.

Eine Rohrschelle, wie sie hier beschrieben ist, umfasst insbesondere ferner eine Öffnung am ersten Bügel, in die das elastische Bauteil eingreift.

Der erste Bügel kann eine oder mehrere Öffnungen umfassen, in die das elastische Bauteil eingreift oder durch die das elastische Bauteil hindurchgreift. Insbesondere greift das erste Ende des elastischen Bauteils in die Öffnung oder in die Öffnungen ein und ist dadurch formschlüssig in einer vorbestimmten Position relativ zum ersten Bügel gehalten.

Bei einer Rohrschelle, wie sie hier beschrieben ist, weist die Öffnung am ersten Bügel insbesondere im Wesentlichen die Gestalt eines geraden streifenförmigen Schlitzes oder die Gestalt eines Kreuzes oder eine T-förmige Gestalt auf.

Die Öffnung weist insbesondere die Gestalt eines geraden streifenförmigen Schlitzes, der sich in Richtung parallel zur Längsachse eines in die Rohrschelle eingelegten Rohrs erstreckt, auf. Die Rohrschelle kann mehrere derartige Öffnungen umfassen, die insbesondere auf einer Geraden parallel zur Längsachse eines in die Rohrschelle eingelegten Rohrs angeordnet sind.

Wenn die Öffnung die Gestalt eines Kreuzes oder eine T-förmige Gestalt aufweist, ist insbesondere ein Balken bzw. sind zwei einander gegenüberliegende Schenkel in Richtung parallel zur Längsachse eines in die Rohrschelle eingelegten Rohrs und der andere Balken orthogonal dazu angeordnet. Die beiden jeweils balkenförmigen Bereiche der Öffnung können unterschiedliche Breiten aufweisen, die ihren unterschiedlichen Funktionen entsprechen können.

Bei einer Rohrschelle, wie sie hier beschrieben ist, greift insbesondere ein erstes Ende des elastischen Bauteils in die Öffnung am ersten Bügel, wobei ein zweites Ende des elastischen Bauteils am Gewindebauteil anliegt. Das in die Öffnung am ersten Bügel eingreifende erste Ende des elastischen Bauteils ist dadurch insbesondere formschlüssig mit dem ersten Bügel verbunden, so dass das elastische Bauteil in einer vorbestimmten Position relativ zum ersten Bügel gehalten ist.

Bei einer Rohrschelle, wie sie hier beschrieben ist, ist das elastische Bauteil insbesondere von der Innenseite der Rohrschelle her an das zweite Ende des ersten Bügels angesetzt, wobei ein erstes Ende des elastischen Bauteils das zweite Ende des ersten Bügels teilweise umgreift, und wobei ein zweites Ende des elastischen Bauteils von der Innenseite der Rohrschelle her durch die Öffnung am ersten Bügel hindurchgreift und an dem Gewindebauteil anliegt.

Das elastische Bauteil ist insbesondere durch eine bezogen auf ein in die Rohrschelle eingesetztes Rohr im Wesentlichen radiale Bewegung nach außen an das zweite Ende des ersten Bügels angesetzt. Wiederum liegt das zweite Ende des ersten Bügels insbesondere zumindest teilweise zwischen dem Gewindebauteil und dem ersten Ende des elastischen Bauteils.

Bei einer Rohrschelle, wie sie hier beschrieben ist, ist insbesondere zwischen zwei Zungen der Mehrzahl von Zungen ein Einschnitt zur Aufnahme eines Schafts einer Spannschraube vorgesehen.

Aufgrund des Einschnitts kann das elastische Bauteil einfach von außen oder von innen über das Gewindebauteil und das zweite Ende des ersten Bügels gestülpt werden, ohne das Einsetzen einer Spannschraube zu verhindern oder eine bestimmte Reihenfolge hinsichtlich des Einsetzens der Spannschraube und des Ansetzens des elastischen Bauteils zu erfordern oder eine Schwenkbarkeit des Gewindebauteils mit der Spannschraube einzuschränken.

Bei einer Rohrschelle, wie sie hier beschrieben ist, umfasst das elastische Bauteil insbesondere ein Metallblech oder ist aus Metallblech gebildet.

Bei einer Rohrschelle, wie sie hier beschrieben ist, umgreift das elastische Bauteil das Gewindebauteil insbesondere zumindest teilweise.

Das elastische Bauteil umgreift das Gewindebauteil bezogen auf einen Flächenschwerpunkt des Querschnitts des Gewindebauteils insbesondere zu mindestens zwei Drittel (240 Grad) oder zu mindestens drei Viertel (270 Grad) oder zu mindestens fünf Sechstel (300 Grad). Indem das elastische Bauteil das Gewindebauteil und insbesondere auch das zweite Ende des ersten Bügels zu mehr als die Hälfte umgreift, kann das elastische Bauteil formschlüssig am Gewindebauteil und am zweiten Ende des ersten Bügels gehalten sein.

Bei einer Rohrschelle, wie sie hier beschrieben ist, sind am zweiten Ende des ersten Bügels insbesondere Zungen vorgesehen, die das Gewindebauteil zumindest teilweise umgreifen, wobei ein Einschnitt zwischen den Zungen zur Aufnahme des Schafts einer Spannschraube vorgesehen ist, wobei das elastische Bauteil auch die Zungen am zweiten Ende des ersten Bügels zumindest teilweise umgreift.

Die Zungen bilden insbesondere das zweite Ende des ersten Bügels und sind insbesondere kreisbogenförmig ausgebildet, weisen also in Schnittebenen orthogonal zur Schwenkachse des Gewindebauteils kreisbogenförmige Querschnitte auf.

Bei einer Rohrschelle, wie sie hier beschrieben ist, sind die Zungen am zweiten Ende des ersten Bügels insbesondere zumindest teilweise zwischen dem Gewindebauteil und dem elastischen Bauteil angeordnet.

Insbesondere sind die Zungen vollständig oder weitgehend zwischen dem Gewindebauteil und dem elastischen Bauteil angeordnet.

Eine Rohrschelle, wie sie hier beschrieben ist, umfasst insbesondere ferner eine Spannschraube mit einem Kopf, einem Schaft und einem zum Innengewinde am Gewindebauteil korrespondierenden Außengewinde, wobei der Durchmessers des Kopfes größer und der Durchmesser des Schafts geringer als die Breite des Einschnitts am zweiten Ende des zweiten Bügels ist.

Nachfolgend sind Ausführungsbeispiele anhand der beigefügten Figuren näher erläutert. Es zeigen:
- Figur 1: eine schematische Darstellung einer Rohrschelle;
- Figur 2: eine schematische axonometrische Darstellung der Rohrschelle aus Figur 1;
- Figur 3: eine schematische axonometrische Darstellung eines Bügels der Rohrschelle aus den Figuren 1 und 2;
- Figur 4: eine schematische axonometrische Darstellung eines Gewindebauteils der Rohrschelle aus Figuren 1 und 2;
- Figur 5: eine schematische axonometrische Darstellung eines Federbauteils der Rohrschelle aus Figuren 1 und 2;
- Figur 6: eine weitere schematische Darstellung der Rohrschelle aus den Figuren 1 und 2;
- Figur 7: eine schematische axonometrische Darstellung einer weiteren Rohrschelle;
- Figur 8: eine schematische axonometrische Darstellung eines Federbauteils der Rohrschelle aus Figur 7;
- Figur 9: eine schematische Darstellung einer Öffnung an der Rohrschelle aus Figur 8;
- Figur 10: eine schematische Darstellung einer weiteren Rohrschelle;
- Figur 11: eine schematische axonometrische Darstellung der Rohrschelle aus Figur 10;
- Figur 12: eine schematische axonometrische Darstellung eines Federbauteils der Rohrschelle aus den Figuren 10 und 11.

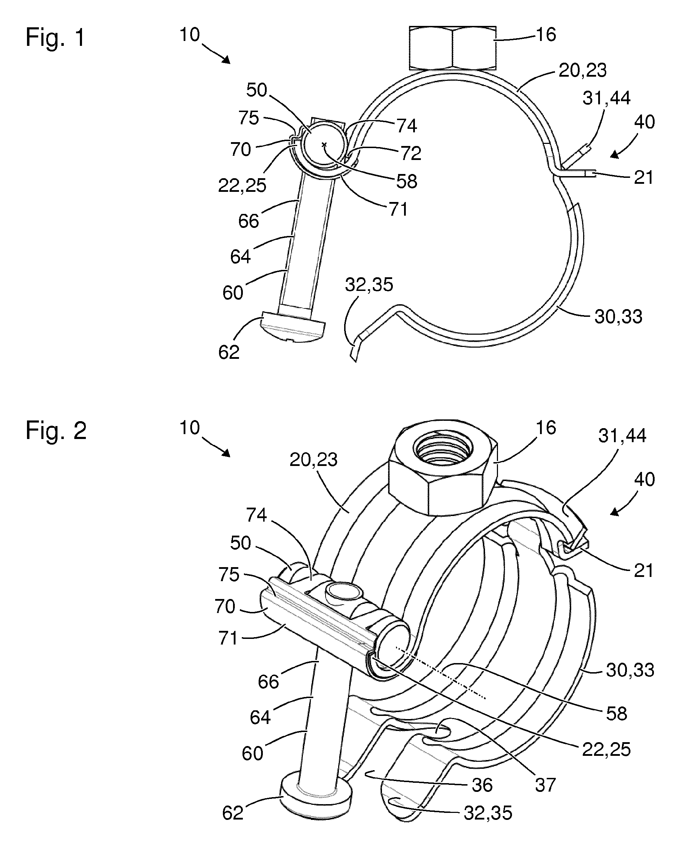

Figur 1 zeigt eine schematische Darstellung einer Rohrschelle 10 mit einer Befestigungsmutter 16 zur Befestigung der Rohrschelle 10 an einer Gewindestange oder an einem anderen Bauteil mit einem korrespondierenden Außengewinde. Die Rohrschelle umfasst einen ersten Bügel 20 und einen zweiten Bügel 30, die jeweils im Wesentlichen halbkreisbogenförmig ausgebildet sind. Die Befestigungsmutter 16 ist im Wesentlichen in der Mitte des ersten Bügels 20 befestigt, insbesondere durch eine Schweißverbindung. Die Bügel 20, 30 sind insbesondere aus Metallblech durch Stanzen und mittels eines oder mehrerer Umformverfahren gefertigt.

Der erste Bügel 20 weist ein erstes Ende 21, ein zweites Ende 22 und dazwischen einen im Wesentlichen halbkreisbogenförmigen Abschnitt 23 zum teilweisen Umgreifen eines Rohrs oder eines Schlauchs auf. Der zweite Bügel 30 weist ein erstes Ende 31, ein zweites Ende 32 und dazwischen einen im Wesentlichen halbkreisbogenförmigen Abschnitt 33 zum teilweisen Umgreifen eines Rohrs oder eines Schlauchs auf. Das erste Ende 21 des ersten Bügels 20 und das erste Ende 31 des zweiten Bügels 30 sind durch eine Gelenkeinrichtung 40 miteinander gelenkig verbunden. Die Gelenkeinrichtung 40 umfasst einen Haken 44 am ersten Ende 31 des zweiten Bügels 30, der in eine in Figur 1 nicht erkennbare Öffnung am ersten Ende 21 des ersten Bügels 20 eingreift.

Das zweite Ende 22 des ersten Bügels 20 wird durch zwei kreisbogenförmig nach außen umgebogene Zungen 25 am ersten Bügel 20 gebildet. Die Krümmung der Zungen 25 ist entgegengesetzt zur Krümmung des halbkreisbogenförmigen Abschnitts 23. Die - bezogen auf den von der Rohrschelle 10 zu umschließenden Raum - nach außen gerichtete Krümmung der Zungen 25 grenzt bei dem dargestellten Beispiel unmittelbar oder nur mit geringem Abstand an die nach innen gerichtete Krümmung des halbkreisbogenförmigen Abschnitts 23 an.

Ein Gewindebauteil 50 ist so am zweiten Ende 22 des ersten Bügels 20 der Rohrschelle 10 angeordnet, dass es teilweise von den Zungen 25 umgeben bzw. umgriffen ist. Insbesondere umschließen die Zungen 25 am zweiten Ende 22 des ersten Bügels 20 das Gewindebauteil 50 im Wesentlichen zur Hälfte, d. h. bezogen auf den Flächenschwerpunkt des Querschnitts des Gewindebauteils 50 (in einer Ebene parallel zur Zeichenebene der Figur 1) erstreckt sich der im Wesentlichen durch die Zungen 25 gebildete nach außen gekrümmte Abschnitt des ersten Bügels 20 über einen Winkel von ca. 180 Grad oder im Bereich von 160 Grad bis 200 Grad.

Das Gewindebauteil 50 ist im Wesentlichen kreiszylindrisch und um eine Schwenkachse 58, die die Symmetrieachse des Gewindebauteils 50 ist, schwenkbar. Die Schwenkachse 58 ist orthogonal zur Zeichenebene der Figur 1. Das Gewindebauteil 50 weist - abweichend von einer rein kreiszylindrischen Gestalt - zwei Abflachungen und eine Durchgangsbohrung mit einem Innengewinde auf, die in Figur 1 nicht erkennbar sind.

Ein Federbauteil 70 aus metallischem Federblech umschließt das Gewindebauteil 50 weitgehende, wobei die Zungen 25 am zweiten Ende 22 des ersten Bügels 20 zwischen dem Federbauteil 70 und dem Gewindebauteil 50 angeordnet sind. Ein erstes Ende des Federbauteils 70 ist durch zwei erste Zungen 72 gebildet, die in zwei in Figur 1 nicht erkennbare Öffnungen im ersten Bügel 20 nahe dessen zweitem Ende 22 eingreifen. Ein zweites Ende des Federbauteils 70 wird durch zwei zweite Zungen 74 gebildet, die in den erwähnten, jedoch in Figur 1 nicht erkennbaren Abflachungen am Gewindebauteil 50 angeordnet sind, so dass in Figur 1 nur noch die äußersten Enden dieser zweiten Zungen 74 erkennbar sind.

Das Federbauteil 70 weist einen Bereich 71 auf, der im Wesentlichen die Gestalt eines Ausschnitts eines Mantels eines Kreiszylinders, dessen Symmetrieachse parallel zur Schwenkachse 58 des Gewindebauteils 50 und orthogonal zur Zeichenebene der Figur 1 ist, aufweist. Zwischen dem Bereich 71 und den zweiten Zungen 74 ist eine Stufe 75 zur Anlage an den Rändern der Zungen 25 am ersten Bügel 20 vorgesehen. Durch die ersten Zungen 72, die in Öffnungen am ersten Bügel 20 eingreifen, und die Stufe 75, die an den Rändern der Zungen 25 anliegt, ist das Federbauteil 70 formschlüssig am ersten Bügel 20 gehalten. Insbesondere kann das Federbauteil 70 nicht in einer Schwenkbewegung um die Schwenkachse 58 des Gewindebauteils 50 relativ zum ersten Bügel 20 verschoben werden.

Ebenfalls in Figur 1 nicht erkennbar ist, dass das zweite Ende 32 des zweiten Bügels 30 durch zwei parallele Zungen 35 gebildet ist.

Eine Spannschraube 60 weist einen Kopf 62 und einen Schaft 64 auf. Der Schaft 64 der Spannschraube 60 weist ein zu dem Innengewinde am Gewindebauteil 50 korrespondierendes Außengewinde 66 auf. In Figur 1 ist eine Konfiguration bzw. Situation gezeigt, in der der Schaft 64 der Spannschraube 60 in die Bohrung im Gewindebauteil 50 eingesetzt ist. Bei der in Figur 1 dargestellten Situation bzw. Konfiguration ist die Rohrschelle 10 offen, der zweite Bügel 30 kann relativ zum ersten Bügel 20 um eine durch die Gelenkeinrichtung 40 definierte Schwenkachse orthogonal zur Zeichenebene der Figur 1 geschwenkt werden.

Figur 2 zeigt eine schematische axonometrische Darstellung der Rohrschelle 10 aus Figur 1. Figur 2 zeigt die gleiche Situation bzw. Konfiguration wie Figur 1. Im Unterschied zu Figur 1 sind in Figur 2 aufgrund der gewählten Blickrichtung einige Merkmale und Eigenschaften der Rohrschelle 10 erkennbar, die in Figur 1 nicht erkennbar sind, jedoch teilweise in der Beschreibung der Figur 1 erwähnt sind.

Zwischen den beiden im Wesentlichen parallelen Zungen 35, die das zweite Ende 32 des zweiten Bügels 30 der Rohrschelle bilden, ist ein Einschnitt 36 vorgesehen. Die Breite des Einschnitts 36 ist etwas größer als der Durchmesser des Schafts 64 der Spannschraube 60. Nach dem Schließen der Rohrschelle 10 bzw. dem Schwenken des zweiten Endes 32 des zweiten Bügels 30 zum zweiten Ende 22 des ersten Bügels 20 hin kann deshalb durch Schwenken des Gewindebauteils 50 und der Spannschraube 60 um die Schwenkachse 58 des Gewindebauteils 50 der Schaft 64 der Spannschraube 60 in den Einschnitt 36 zwischen den Zungen 35 eingeführt werden kann.

Der Einschnitt 36 zwischen den Zungen 35 am zweiten Bügel 30 erstreckt sich in den im Wesentlichen halbkreisbogenförmigen Abschnitt 33 des zweiten Bügels 30 hinein. Der Bereich 37 des Einschnitts 36, der sich in dem im Wesentlichen halbkreisbogenförmigen Abschnitt 33 des zweiten Bügels 30 befindet, bildet eine Öffnung zur teilweisen Aufnahme des Kopfes 62 der Spannschraube 60 in ihrem geschlossenen Zustand.

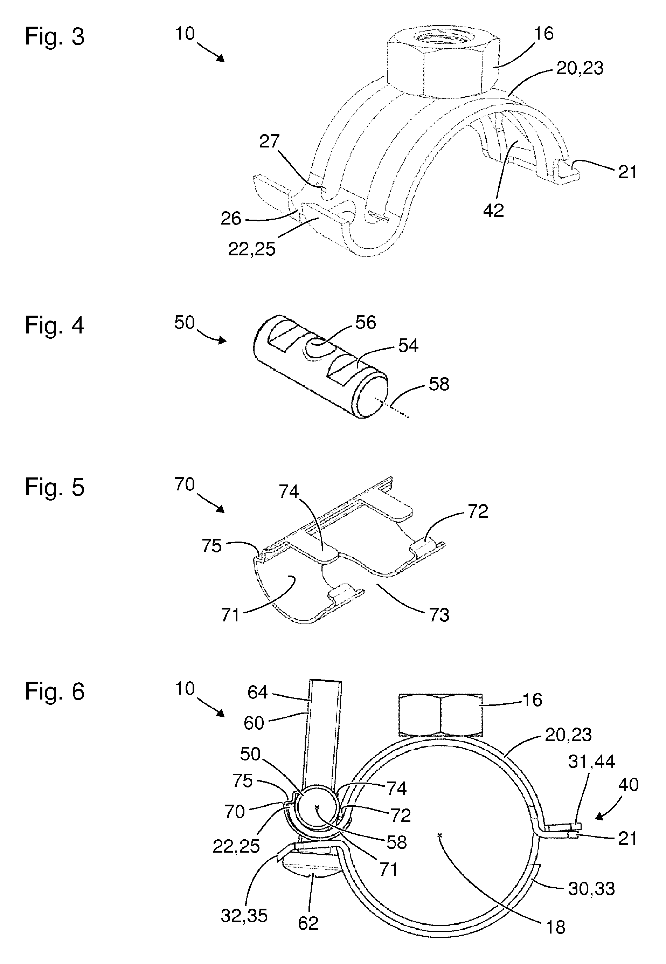

Die das zweite Ende des Federbauteils 70 bildenden zweiten Zungen 74 sind parallel zueinander und jeweils rechteckig oder im Wesentlichen rechteckig. Jede Zunge 74 liegt an einer korrespondierenden Abflachung am Gewindebauteil 50 an, die anhand der Figur 4 beschrieben ist.

Figur 3 zeigt eine schematische axonometrische Darstellung des ersten Bügels 20. Da in Figur 3 weder der zweite Bügel 30 noch das Gewindebauteil 50, die Spannschraube 60 und das Federbauteil 70 (vgl. Figuren 1, 2) dargestellt sind, sind teils in den Beschreibungen der Figuren 1 und 2 erwähnte, jedoch in den Figuren 1 und 2 nicht sichtbare Merkmale und Eigenschaften des ersten Bügels 20 erkennbar.

Die das zweite Ende 22 des ersten Bügels 20 bildenden Zungen 25 sind im Wesentlichen parallel zueinander. Die Zungen 25 weisen insbesondere die Gestalt zweier Ausschnitte aus ein und demselben Kreiszylindermantel auf. Zwischen den Zungen 25 ist ein Einschnitt 26 vorgesehen, dessen Breite zumindest teilweise mindestens so groß ist wie der Außendurchmesser des Schafts 64 der Spannschraube 60 (vgl. Figuren 1, 2), so dass der Schaft 64 der Spannschraube 60 durch den Einschnitt 26 hindurchgeführt werden kann.

Der erste Bügel 20 weist nahe seinem durch die Zungen 25 gebildeten zweiten Ende 22 zwei Öffnungen 27 auf die in der Beschreibung der Figur 1 erwähnt sind. Jede Öffnung 27 weist die Gestalt eines schmalen geraden Streifens auf. Die Öffnungen 27 sind dafür vorgesehen, die ersten Zungen 72 des Federbauteil 70 aufzunehmen.

Aufgrund der im Vergleich zu Figur 2 etwas veränderten Blickrichtung ist in Figur 3 die in Bezug zur Figur 1 erwähnte, jedoch dort nicht erkennbare Öffnung 42 nahe dem ersten Ende 21 des ersten Bügels 20 erkennbar. Die Öffnung 42 ist so ausgebildet, dass der hammer- oder T-förmige Haken 44 am ersten Ende 31 des zweiten Bügels 30 (vgl. Figuren 1, 2) durch die Öffnung 42 hindurchgeführt werden und dort formschlüssig gelenkig gehalten werden kann.

Figur 4 zeigt eine schematische axonometrische Darstellung des Gewindebauteils 50 aus einer Blickrichtung, die derjenigen der Figur 2 ähnelt.

In Figur 4 ist die Durchgangsbohrung mit dem Innengewinde 56 orthogonal zur Schwenkachse 58 des Gewindebauteils 50 erkennbar. Ferner sind die bereits in der Beschreibung der Figuren 1 und 2 erwähnten Abflachungen 54 am Gewindebauteil 50 erkennbar. In Schnittebenen, die parallel zur Schwenkachse 58 des Gewindebauteils 50 sind, weisen die Abflachungen 54 jeweils trapezförmige Querschnitte auf.

Figur 5 zeigt eine schematische axonometrische Darstellung des Federbauteils 70. Blickrichtung und Maßstab unterscheiden sich deutlich von den Darstellungen der Figuren 2 bis 4, um weitere Merkmale des Federbauteils 70 sichtbar zu machen.

Wie in der Beschreibung der Figur 1 erwähnt, weist das Federbauteil 70 einen Bereich 71 auf, der im Wesentlichen die Gestalt eines Ausschnitts eines Mantels eines Kreiszylinders aufweist. Am einen Rand dieses Bereichs 71 sind die das erste Ende des Federbauteils 70 bildenden Zungen 72 zum Eingriff in die Öffnungen 27 des ersten Bügels 20 (vgl. Figur 3) vorgesehen. Zwischen den beiden ersten Zungen 72 ist ein Einschnitt 73 zur Aufnahme des Schafts 64 der Spannschraube 60 (vgl. Figuren 1, 2) vorgesehen. An der gegenüberliegenden Seite des Bereichs 71 sind die das zweite Ende des Federbauteils bildenden zweiten Zungen 74 vorgesehen. Die ersten Zungen 72 und die zweiten Zungen 74 sind jeweils im Wesentlichen rechteckig, optional mit die Montage vereinfachenden abgerundeten Ecken. Zwischen dem Bereich 71 und den zweiten Zungen 74 ist die Stufe 75 zur Anlage an den Rändern der Zungen 25 am ersten Bügel 20 vorgesehen (vgl. Figuren 1 bis 3).

Figur 6 zeigt eine weitere schematische Darstellung der Rohrschelle aus den Figuren 1 und 2. Die Art der Darstellung entspricht derjenigen der Figur 1. Figur 6 zeigt die Rohrschelle 10 geschlossen und durch Festziehen der Spannschraube 60 gespannt.

Als Mittelachse 18 der Rohrschelle 10 wird die Achse eines in der vorgesehenen Weise in die Rohrschelle 10 eingelegten kreiszylindrischen Rohres, das selbst in Figur 6 nicht gezeigt ist, bezeichnet.

Das zweite Ende 22 des ersten Bügels ragt - bezogen auf die Richtung der Längsachse der Spannschraube 60 - bis zum Flächenschwerpunkt des Querschnitts des Gewindebauteils 50, der auf der Symmetrieachse 58 des Gewindebauteils 50 liegt. Dadurch wird auch bei hoher Reibung zwischen der Schraube und dem Gewindebauteil eine unerwünschte Rotation des Gewindebauteils um die Längsachse der Schraube 60 wirksam formschlüssig unterbunden. Alternativ kann das zweite Ende 22 des ersten Bügels über den Flächenschwerpunkt des Querschnitts des Gewindebauteils 50 hinaus ragen, um das Gewindebauteil 50 noch besser an einer Rotation um die Längsachse der Schraube 60 zu hindern.

Der Kopf 62 der Schraube 60 greift seitlich in die Öffnung 37 (vgl. Figur 2) im im Wesentlichen halbkreisbogenförmigen Abschnitt 33 des zweiten Bügels 30 ein. Dadurch können die Ausladung des Kopfes 62 der Schraube 60 und des zweiten Endes 32 des zweiten Bügels 30, d. h. ihre maximalen Abstände von der Achse 18 eines in die Rohrschelle 10 eingelegten Rohrs, reduziert werden. Diese Wirkung kann auch dann erzielt werden, wenn die Öffnung 37 nicht wie bei dem anhand der Figuren 1 bis 6 dargestellten Beispiel durch das Ende des Einschnitts 36 zwischen den Zungen 35 gebildet, sondern beispielsweise vom Ende des Einschnitts 36 durch einen Steg getrennt ist.

Bei einer möglichen Modifikation der anhand der Figuren 1 bis 6 dargestellten Rohrschelle 10 weist das Federbauteil 70 keine Stufe 75 auf. Alternativ zu der Stufe 75 können beispielsweise zwischen und/oder neben den zweiten Zungen 74 kurze Zungen (ähnlich den ersten Zungen 72) vorgesehen sein, durch die das Federbauteil 70 an den Rändern der Zungen 25 am ersten Bügel 20 abgestützt sein kann.

Bei einer weiteren möglichen Modifikation der anhand der Figuren 1 bis 6 dargestellten Rohrschelle 10 sind die zweiten Zungen 74 nicht gerade, sondern geschwungen ausgebildet, um bei im Übrigen gleichen geometrischen Eigenschaften und gleichen Materialeigenschaften eine größere Elastizität aufzuweisen.

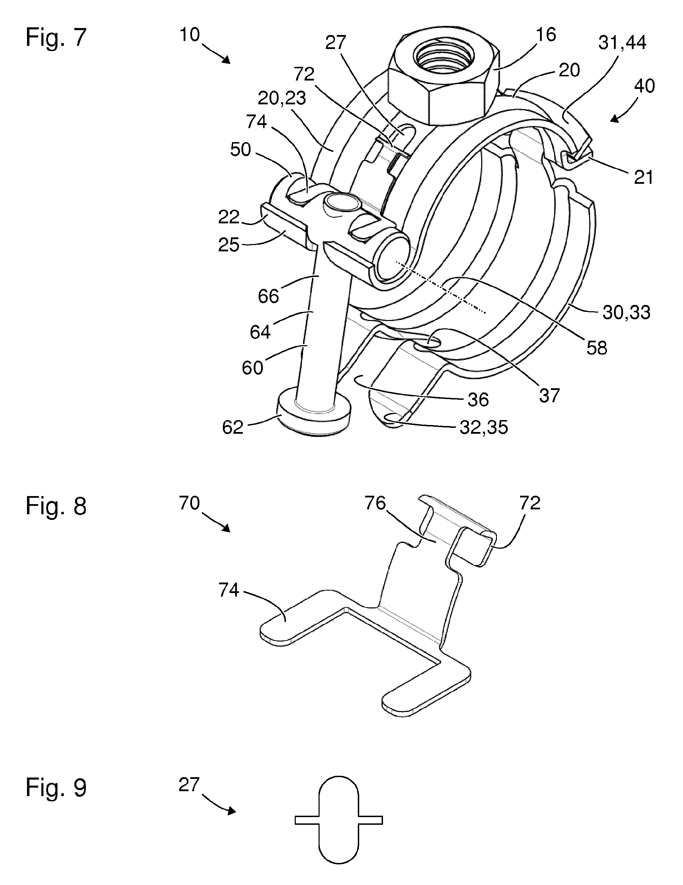

Figur 7 zeigt eine schematische axonometrische Darstellung einer weiteren Rohrschelle 10, die in einigen Merkmalen, Eigenschaften und Funktionen der anhand der Figuren 1 bis 6 dargestellten Rohrschelle ähnelt. Die Art der Darstellung, insbesondere die Blickrichtung, entspricht derjenigen der Figur 2. Nachfolgend sind Merkmale, Eigenschaften und Funktionen der Rohrschelle 10 beschrieben, in denen diese sich von der anhand der Figuren 1 bis 6 dargestellten Rohrschelle unterscheidet.

Die in Figur 7 gezeigte Rohrschelle 10 unterscheidet sich von der anhand der Figuren 1 bis 6 dargestellten Rohrschelle insbesondere durch die Gestalt und Anordnung des Federbauteils 70. Das Federbauteil 70 ist - ähnlich wie bei der anhand der Figuren 1 bis 6 dargestellten Rohrschelle - aus Federstahlblech gefertigt, insbesondere durch Stanzen und Biegen. Anders als bei der anhand der Figuren 1 bis 6 dargestellten Rohrschelle umgreift das Federbauteil 70 das Gewindebauteil 50 nicht. Vielmehr ist das erste Ende 72 des Federbauteils 70 in einer Öffnung 27 im ersten Bügel 20 angeordnet und dort formschlüssig gehalten. Zwei Zungen 74 bilden das zweite Ende des Federbauteils und liegen an Abflachungen 54 des Gewindebauteils 50 an. Das Gewindebauteil 50 entspricht dem Gewindebauteil der anhand der Figuren 1 bis 6 dargestellten Rohrschelle.

Figur 8 zeigt eine schematische axonometrische Darstellung des Federbauteils 70 der Rohrschelle aus Figur 7. Die Darstellung in Figur 8 ist gegenüber derjenigen der Figur 7 vergrößert.

In Figur 8 ist erkennbar, dass das erste Ende 72 des Federbauteils 70 U-förmig umgebogen ist. Nahe dem U-förmig umgebogenen ersten Ende 72 weist das Federbauteil 70 einen verjüngten Bereich 76 auf.

Figur 9 zeigt eine schematische Darstellung der Öffnung 27 im ersten Bügel 20. Die Öffnung 27 ist im Wesentlichen kreuzförmig, wobei zwei einander gegenüberliegende und in Figur 9 horizontal dargestellte Schenkel parallel zur Mittelachse 18 der Rohrschelle 10 (vgl. Figur 6) und zur Schwenkachse 58 des Gewindebauteils 50 (vgl. Figur 1) angeordnet sind. Die Breite dieser beiden schmalen Schenkel entspricht näherungsweise der Dicke des Materials, aus dem das Federbauteil 70 (vgl. Figuren 7, 8) gefertigt ist. Die Gesamtlänge der beiden schmalen Schenkel entspricht der Breite des U-förmig umgebogenen ersten Endes 72 des Federbauteils 70 (vgl. Figur 8) oder ist nur unwesentlich größer.

Die anderen beiden, in Figur 9 vertikal dargestellten Schenkel der Öffnung 27 sind deutlich breiter, nämlich breiter als das U-förmig umgebogene erste Ende 72 des Federbauteils 70 (vgl. Figur 8). Die Breite des verjüngten Bereichs 76 des Federbauteils 70 ist etwas kleiner oder nicht größer als die Breite der in Figur 9 vertikal dargestellten Schenkel der Öffnung 27. Die beiden breiten Schenkel erstrecken sich in Richtung parallel zum Umfang der Rohrschelle 10 (vgl. Figur 7) und orthogonal zur Mittelachse 18 der Rohrschelle 10 (vgl. Figur 6).

Das Federbauteil 70, insbesondere das erste Ende 72 und der verjüngte Bereich 76 des Federbauteils 70, und die Öffnung 27 im ersten Bügel 20 der Rohrschelle 10 sind so ausgebildet, dass zur Montage des Federbauteils 70 am ersten Bügel 20 zunächst das erste Ende 72 des Federbauteils 70 mit einer radialen Bewegung durch die Öffnung 27 hindurchgeführt, dann um 90 Grad um diese radiale Bewegungsrichtung gedreht und schließlich um eine Schwenkachse parallel zur Mittelachse 18 der Rohrschelle 10 und nahe den schmalen Schenkeln der Öffnung 27 in die in Figur 7 gezeigte Position geschwenkt werden kann.

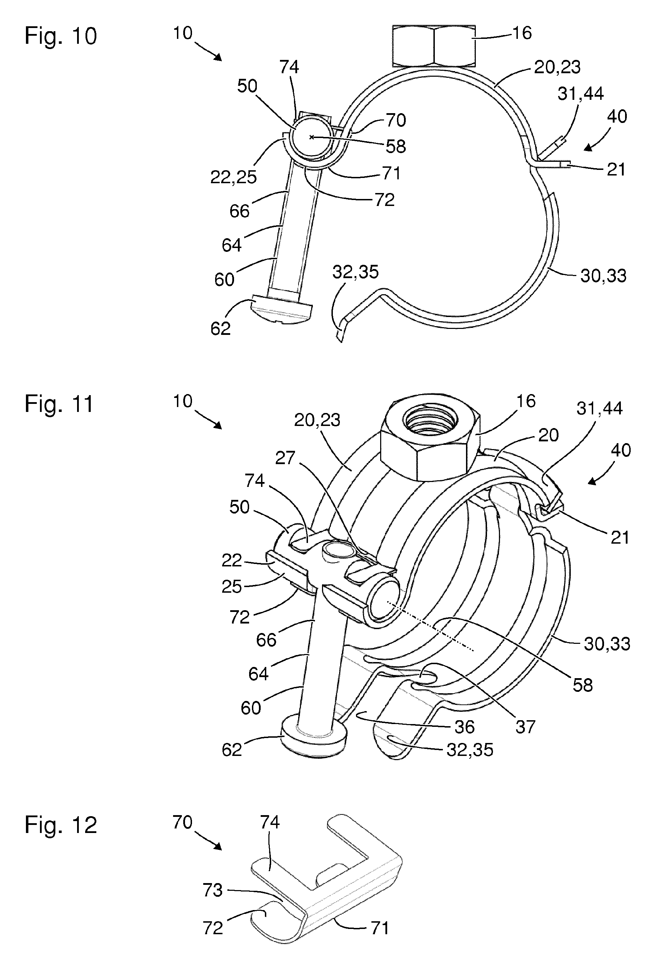

Figur 10 zeigt eine schematische Darstellung einer weiteren Rohrschelle 10, die in einigen Merkmalen, Eigenschaften und Funktionen den anhand der Figuren 1 bis 9 dargestellten Rohrschellen ähnelt. Nachfolgend sind Merkmale und Eigenschaften beschrieben, in denen die in Figur 10 gezeigte Rohrschelle 10 sich von den anhand der Figuren 1 bis 9 dargestellten Rohrschellen unterscheidet.

Die in Figur 10 gezeigte Rohrschelle unterscheidet sich insbesondere von der anhand der Figuren 1 bis 6 dargestellten Rohrschelle dadurch, dass das Federbauteil 70 das Gewindebauteil 50 und die das zweite Ende 22 des ersten Bügels 20 bildenden Zungen 25 nicht von außen, sondern von innen umgreift. Dazu weist der erste Bügel 20 der Rohrschelle 10 nahe seinem zweiten Ende 22 eine Öffnung 27 mit der Gestalt eines schmalen länglichen Rechtecks parallel zur Schwenkachse 58 des Gewindebauteils 50 auf.

Figur 11 zeigt eine schematische axonometrische Darstellung der Rohrschelle aus Figur 10. Erste Zungen 72 des Federbauteils 70 liegen an den das zweite Ende 22 des ersten Bügels 20 bildenden Zungen 25 an, so dass die Zungen 25 des ersten Bügels 20 teilweise zwischen den ersten Zungen 72 des Federbauteils 70 und dem Gewindebauteil 50 liegen. Ein zweites Ende des Federbauteils 70 bildende zweite Zungen 74 liegen an Abflachungen 54 am Gewindebauteil 50 an.

Figur 12 zeigt eine schematische axonometrische Darstellung des Federbauteils der Rohrschelle aus den Figuren 10 und 11. Die Blickrichtung und der Maßstab sind von demjenigen der Figur 11 verschieden. Zwischen den das erste Ende des Federbauteils 70 bildenden ersten Zungen 72 ist ein Einschnitt 73 vorgesehen, in dem bei der montierten Rohrschelle der Schaft 64 der Spannschraube 60 angeordnet ist.

Bei allen anhand der Figuren 1 bis 12 dargestellten Rohrschellen sind die Federbauteile 70 mit Vorspannung gefertigt, so dass die zweiten Zungen 74 jederzeit am Gewindebauteil 50 anliegen. In einer vorbestimmten Position des Gewindebauteils 50, die insbesondere in den Figuren 1, 2, 7, 10 und 11 dargestellt ist, liegen die zweiten Zungen 74 des Federbauteils 70 flächig an den Abflachungen 54 des Gewindebauteils 50 an, und die potenzielle Energie des Federbauteils 70 ist minimal. So hält das Federbauteil 70 das Gewindebauteil 50 in der vorbestimmten Position, solange keine weitere Kraft und kein weiteres Drehmoment auf das Gewindebauteil 50 oder die Spannschraube 60 wirkt. Wenn das Gewindebauteil 50 aus der vorbestimmten Position ausgelenkt wird, wird das Federbauteil 70 verformt, insbesondere werden die zweiten Zungen 74 verformt. Dadurch entsteht eine rückstellende Kraft zu der vorbestimmten Position des Gewindebauteils 50 hin.

### Bezugszeichenliste:

- 10: Rohrschelle
- 16: Befestigungsmutter an Rohrschelle 10
- 18: Mittelachse der Rohrschelle 10
- 20: erster Bügel
- 21: erstes Ende des ersten Bügels 20
- 22: zweites Ende des ersten Bügels 20
- 23: im Wesentlichen kreisbogenförmiger Abschnitt des ersten Bügels 20 zum teilweisen Umgreifen eines Rohrs oder eines Schlauchs
- 25: im Wesentlichen kreisbogenförmig nach außen umgebogene Zunge am zweiten Ende 22 des ersten Bügels 20
- 26: Einschnitt zwischen den nach außen umgebogenen Zungen 25
- 27: Öffnung im ersten Bügel 20, in das das Federbauteil 70 eingreift
- 30: zweiter Bügel
- 31: erstes Ende des zweiten Bügels 30
- 32: zweites Ende des zweiten Bügels 30
- 33: im Wesentlichen kreisbogenförmiger Abschnitt des zweiten Bügels 30 zum teilweisen Umgreifen eines Rohrs oder eines Schlauchs
- 35: Zunge am zweiten Ende 32 des zweiten Bügels 30
- 36: Einschnitt zwischen den Zungen 35 am zweiten Ende 32 des zweiten Bügels 30
- 37: Verlängerung des Einschnitts 36 oder Fenster im zweiten Bügel 30 zur teilweisen Aufnahme des Kopfes 62 der Spannschraube 60
- 40: Gelenkeinrichtung zwischen den ersten Enden 21, 31 der Bügel 20, 30 der Rohrschelle 10
- 42: Öffnung der Gelenkeinrichtung 40 am ersten Ende 21 des ersten Bügels 20
- 44: Haken der Gelenkeinrichtung 40 am ersten Ende 31 des zweiten Bügels 30 zum Eingreifen in die Öffnung 42
- 50: Gewindebauteil am zweiten Ende 22 des ersten Bügels 20
- 54: Abflachung am Gewindebauteil 50
- 56: Innengewinde am Gewindebauteil 50
- 58: Schwenkachse des Gewindebauteils 50
- 60: Spannschraube
- 62: Kopf der Spannschraube 60
- 64: Schaft der Spannschraube 60
- 66: Außengewinde an der Spannschraube 60
- 70: Federbauteil der Rohrschelle 10
- 71: Bereich des Federbauteils mit Gestalt eines Ausschnitts eines Mantels eines Kreiszylinders
- 72: erstes Ende bzw. erste Zunge am ersten Ende des Federbauteils 70
- 73: Einschnitt zwischen den ersten Zungen 72 zur Aufnahme eines Schafts 64 einer Spannschraube 60
- 74: zweites Ende bzw. zweite Zunge am zweiten Ende des Federbauteils 70 zum Anliegen an der Abflachung 54 am Gewindebauteil 50
- 75: Stufe am elastischen Bauteil 70
- 76: verjüngter Bereich des Federbauteils 70

## Patentansprüche

1. **Rohrschelle** (10), mit:
einem **Schellenkörper** mit einem **ersten Bügel** (20) und einem **zweiten Bügel** (30), zum Umfassen und Halten eines Rohrs oder eines Schlauchs;
einer **Gelenkeinrichtung** (40) zum gelenkigen Verbinden eines ersten Endes (21) des ersten Bügels (20) mit einem ersten Ende (31) des zweiten Bügels (30);
einem **Gewindebauteil** (50) mit einem Innengewinde (56), wobei das Gewindebauteil (50) schwenkbar an einem zweiten Ende (22) des ersten Bügel (20) gelagert ist und eine Mehrzahl von Abflachungen (54) aufweist;
einem **elastischen Bauteil** (70) zum Ausüben einer Kraft auf das Gewindebauteil (50) zum elastischen Halten des Gewindebauteils (50) in einer vorbestimmten Winkelposition, wobei das elastische Bauteil (70) eine Mehrzahl von Zungen (74), die an je einer der Mehrzahl von Abflachungen (54) anliegen, aufweist.

2. Rohrschelle (10) nach dem vorangehenden Anspruch, bei der der erste Bügel (20) einen ersten im Wesentlichen **kreisbogenförmigen Abschnitt** (23) zum teilweisen Umfassen eines Rohrs oder eines Schlauchs und einen zweiten im Wesentlichen **kreisbogenförmigen Abschnitt** (25) zum teilweisen Umfassen des Gewindebauteils (50) aufweist, wobei der erste Abschnitt (23) und der zweite Abschnitt (25) in entgegengesetzte Richtungen gekrümmt sind.

3. Rohrschelle (10) nach dem vorangehenden Anspruch, bei der der zweite Abschnitt (25) des ersten Bügels (20) das Gewindebauteil (50) zu mindestens einem Drittel oder zu mindestens der Hälfte oder zu mindestens zwei Dritteln umfasst.

4. Rohrschelle (10) nach einem der vorangehenden Ansprüche, bei der die in Richtung parallel zur Längsachse eines in vorgesehener Weise in die Rohrschelle (10) eingelegten geraden Rohrs gemessene **Länge des Gewindebauteils** (50) mindestens neun Zehntel der in der gleichen Richtung gemessenen **Breite des ersten Bügels** (20) beträgt.

5. Rohrschelle (10) nach einem der vorangehenden Ansprüche, ferner mit:
einer **Öffnung** (37) im zweiten Bügel (30) der Rohrschelle (10) zur teilweisen Aufnahme des Rands eines **Kopfes** (62) einer in das Gewindebauteil (50) eingesetzten Spannschraube (60) im in vorgesehener Weise geschlossenen und gespannten Zustand der Rohrschelle (10).

6. Rohrschelle (10) nach dem vorangehenden Anspruch, bei der
das zweite Ende (32) des zweiten Bügels (30) durch **Zungen** (35) gebildet ist,
die Öffnung (37) zur teilweisen Aufnahme des Rands eines Kopfes (62) einer Spannschraube (60) durch einen Einschnitt (36) zwischen den Zungen (35) gebildet ist.

7. Rohrschelle (10) nach einem der vorangehenden Ansprüche, ferner mit:
einer **Öffnung** (27) am ersten Bügel (20), in die das elastische Bauteil (70) eingreift.

8. Rohrschelle (10) nach dem vorangehenden Anspruch, bei der die Öffnung (27) am ersten Bügel (20) im Wesentlichen die Gestalt eines geraden streifenförmigen **Schlitzes** oder die Gestalt eines **Kreuzes** oder eine T-förmige Gestalt aufweist.

9. Rohrschelle (10) nach dem vorangehenden Anspruch, bei der ein erstes Ende (72) des elastischen Bauteils (70) in die Öffnung (27) am ersten Bügel (20) eingreift,
ein zweites Ende (74) des elastischen Bauteils (70) am Gewindebauteil (50) anliegt.

10. Rohrschelle (10) nach einem der Ansprüche 6, 7, bei der
das elastische Bauteil (70) **von der Innenseite** der Rohrschelle (10) her an das zweite Ende (22) des ersten Bügels (20) angesetzt ist,
ein **erstes Ende** (72) des elastischen Bauteils (70), das zweite Ende (22) des ersten Bügels (20) **teilweise umgreift,**
ein **zweites Ende** (74) des elastischen Bauteils (70) von der Innenseite der Rohrschelle (10) her durch die Öffnung (27) am ersten Bügel (20) hindurch greift und an dem Gewindebauteil (50) anliegt.

11. Rohrschelle (10) nach einem der vorangehenden Ansprüche, bei der zwischen zwei Zungen (74) der Mehrzahl von Zungen (74) ein Einschnitt (73) zur Aufnahme eines Schafts (64) einer Spannschraube (60) vorgesehen ist.

12. Rohrschelle (10) nach einem der vorangehenden Ansprüche, bei der
am zweiten Ende (22) des ersten Bügels (20) **Zungen** (25) vorgesehen sind, die das Gewindebauteil (50) zumindest teilweise umgreifen,
ein Einschnitt (26) zwischen den Zungen (25) zur Aufnahme des Schafts (64) einer Spannschraube (60) vorgesehen ist,
das **elastische Bauteil** (70) auch **die Zungen** (25) am zweiten Ende (22) des ersten Bügels (20) zumindest teilweise **umgreift.**

13. Rohrschelle (10) nach dem vorangehenden Anspruch, bei der
die **Zungen** (25) am zweiten Ende (22) des ersten Bügels (20) zumindest teilweise **zwischen** dem **Gewindebauteil** (50) **und** dem **elastischen Bauteil** (70) angeordnet sind.

## Claims

1. Pipe clamp (10), comprising:
a clamp body having a first bracket (20) and a second bracket (30), for enclosing and supporting a pipe or a hose;
hinge means (40) for pivotally connecting a first end (21) of the first bracket (20) and a first end (31) of the second bracket (30);
a threaded member (50) with an internal thread (56), wherein the threaded member (50) is pivotally supported at a second end (22) of the first bracket (20) and comprises a plurality of flats (54);
an elastic member (70) for exerting a force on the threaded member (50) for resiliently holding the threaded member (50) in a predetermined angular position, wherein the elastic member (70) has a plurality of tongues (74), wherein each tongue (74) lies against one of the plurality of flats (54).

2. Pipe clamp (10) according to the preceding claim, wherein the first bracket (20) comprises a first substantially circular arc-shaped section (23) for partially enclosing a pipe or a hose and a second substantially circular arc-shaped section (25) for partially enclosing the threaded member (50), wherein the first portion (23) and the second portion (25) are curved in opposite directions.

3. Pipe clamp (10) according to the preceding claim, wherein the second portion (25) of the first bracket (20) surrounds the threaded member (50) to at least a third or at least the half, or at least two thirds.

4. Pipe clamp (10) according to one of the preceding claims, wherein the threaded member's (50) length, measured in the direction parallel to the longitudinal axis of a straight tube inserted into the pipe clamp (10) in a predetermined manner, is at least nine tenths of the first bracket's (20) width measured in the same direction.

5. Pipe clamp (10) according to one of the preceding claims, further comprising:
an opening (37) in the second bracket (30) of the pipe clamp (10), for partially receiving the edge of a head (62) of a clamping screw (60) when the clamping screw (60) is inserted into the threaded member (50) and the pipe clamp (10) is closed and tightened in a predetermined manner.

6. Pipe clamp (10) according to the preceding claim, wherein
the second end (32) of the second bracket (30) is formed by tongues (35),
the opening (37) for partially receiving the edge of a head (62) of a clamping screw (60) is formed by an incision (36) between the tongues (35).

7. Pipe clamp (10) according to one of the preceding claims, further comprising:
an opening (27) at the first bracket (20), wherein the elastic member (70) engages the opening (27).

8. Pipe clamp (10) according to the preceding claim, wherein the opening (27) at the first bracket (20) substantially has the shape of a straight stripe-shaped slit or the shape of a cross or a T-shape.

9. Pipe clamp (10) according to the preceding claim, wherein
a first end (72) of the elastic member (70) engages the opening (27) at the first bracket (20),
a second end (74) of the elastic member (70) lies against the threaded member (50).

10. Pipe clamp (10) according to any one of the claims 6, 7, wherein
the elastic member (70) is attached to the second end (22) of the first bracket (20) from the inside of the pipe clamp (10),
a first end (72) of the elastic member (70) partially encloses the second end (22) of the first bracket (20),
a second end (74) of the elastic member (70) reaches, from the inside of the pipe clamp (10), through the opening (27) at the first bracket (20) and lies against the treaded member (50).

11. Pipe clamp (10) according to one of the preceding claims, wherein
between two tongues (72) of the plurality of tongues (72), an incision (73) for receiving a shaft (64) of a clamping screw (60) is provided.

12. Pipe clamp (10) according to one of the preceding claims, wherein
tongues (25) are provided at the second end (22) of the first bracket (20), which tongues (25) at least partially enclose the threaded member (50),
an incision (26) between the tongues (25) is provided for receiving the shaft (64) of a clamping screw (60),
the elastic member (70) at least partially encloses the tongues (25) at the second end (22) of the first bracket (20).

13. Pipe clamp (10) according to the preceding claim, wherein
the tongues (25) at the second end (22) of the first bracket (20) are at least partially disposed between the threaded member (50) and the elastic member (70).

## Revendications

1. Collier de serrage (10), comprenant:
un corps de collier ayant un premier étrier (20) et un second étrier (30) pour entourer et retenir un tube ou un tuyau ;
un dispositif de charnière (40) pour relier de façon articulée une première extrémité (21) du premier étrier (20) avec une première extrémité (31) du second étrier (30) ;
un élément fileté (50) avec un filetage intérieur (56), l'élément fileté (50) étant logé de manière pivotante sur une seconde extrémité (22) du premier étrier (20) et présentant une pluralité de méplats (54);
un élément élastique (70) pour exercer une force sur l'élément fileté (50) en vue de maintenir de manière élastique l'élément fileté (50) dans une position angulaire prédéfinie, ledit élément élastique (70) comportant une pluralité de languettes (74) qui chacune appuie contre l'un des méplats (54) de la pluralité.

2. Collier de serrage (10) selon la revendication précédente, dans lequel le premier étrier (20) comprend une première section (23) essentiellement en forme d'arc de cercle pour entourer partiellement un tube ou un tuyau, et une seconde section (25) essentiellement en forme d'arc de cercle pour entourer partiellement l'élément fileté (50), la première section (23) et la seconde section (25) étant courbées dans des directions opposées.

3. Collier de serrage (10) selon la revendication précédente, dans lequel la seconde section (25) du premier étrier (20) entoure au moins un tiers ou au moins la moitié ou au moins les deux tiers de l'élément fileté (50).

4. Collier de serrage (10) selon l'une des revendications précédentes, dans lequel la longueur de l'élément fileté (50), mesurée dans la direction parallèle à l'axe longitudinal d'un tube droit inséré de la manière prévue dans le collier de serrage (10), s'élève à au moins neuf dixièmes de la largeur du premier étrier (20) mesurée dans la même direction.

5. Collier de serrage (10) selon l'une des revendications précédentes, comprenant en outre:
une ouverture (37) dans le second étrier (30) du collier de serrage (10), ouverture destinée à recevoir partiellement le bord d'une tête (62) d'une vis de serrage (60) insérée dans l'élément fileté (50) lorsque le collier de serrage (10) est à l'état fermé et serré tel que prévu.

6. Collier de serrage (10) selon la revendication précédente, dans lequel
la seconde extrémité (32) du second étrier (30) est formée par des languettes (35),
l'ouverture (37) destinée à recevoir partiellement le bord d'une tête (62) d'une vis de serrage (60) étant formée par une incision (36) réalisée entre les languettes (35).

7. Collier de serrage (10) selon l'une des revendications précédentes, comprenant en outre :
une ouverture (27) réalisée sur le premier étrier (20) dans laquelle s'engage l'élément élastique (70).

8. Collier de serrage (10) selon la revendication précédente, dans lequel
l'ouverture (27) réalisée sur le premier étrier (20) a sensiblement la forme d'une fente de la forme d'une bande droite ou la forme d'une croix ou la forme d'un T.

9. Collier de serrage (10) selon la revendication précédente, dans lequel
une première extrémité (72) de l'élément élastique (70) s'engage dans l'ouverture (27) réalisée sur le premier étrier (20),
une seconde extrémité (74) de l'élément élastique (70) est en appui contre l'élément fileté (50).

10. Collier de serrage (10) selon l'une des revendications 6, 7, dans lequel
l'élément élastique (70) est appliqué depuis l'intérieur du collier de serrage (10) sur la seconde extrémité (22) du premier étrier (20),
une première extrémité (72) de l'élément élastique (70) entoure partiellement la seconde extrémité (22) du premier étrier (20),
une seconde extrémité (74) de l'élément élastique (70) passe depuis l'intérieur du collier de serrage (10) à travers l'ouverture (27) réalisée sur le premier étrier (20) et est en appui contre l'élément fileté (50).

11. Collier de serrage (10) selon l'une des revendications précédentes, dans lequel
il est prévu, entre deux languettes (72) de la pluralité de languettes (72), une incision (73) destinée à recevoir une tige (64) d'une vis de serrage (60).

12. Collier de serrage (10) selon l'une des revendications précédentes, dans lequel
des languettes (25) sont prévues sur la seconde extrémité (22) du premier étrier (20), lesquelles entourent au moins partiellement l'élément fileté (50),
une incision (26) est prévue entre les languettes (25) pour recevoir la tige (64) d'une vis de serrage (60),
l'élément élastique (70) entoure au moins partiellement également les languettes (25) réalisées sur la seconde extrémité (22) du premier étrier (20).

13. Collier de serrage (10) selon la revendication précédente, dans lequel
les languettes (25) réalisées sur la seconde extrémité (22) du premier étrier (20) sont disposées au moins partiellement entre l'élément fileté (50) et l'élément élastique (70).
